# EUROPÄISCHE PATENTSCHRIFT

(11) **EP 4 399 050 B1**
(45) Veröffentlichungstag und Bekanntmachung des Hinweises auf die Patenterteilung: **29.04.2026**
(21) Anmeldenummer: 22772445.7
(22) Anmeldetag: 29.08.2022
(51) Int. Cl.: B23K 26/38

(54) **VERFAHREN ZUM AUSSCHNEIDEN WENIGSTENS EINES WERKSTÜCKS AUS EINER BLECHTAFEL**
METHOD FOR CUTTING AT LEAST ONE WORKPIECE FROM A METAL SHEET
PROCÉDÉ DE DÉCOUPE D'AU MOINS UNE PIÈCE À PARTIR D'UNE TÔLE

(30) Priorität: 10.09.2021 DE 102021123520
(43) Veröffentlichungstag der Anmeldung: 17.07.2024
(73) Patentinhaber: TRUMPF Werkzeugmaschinen SE + Co. KG, 71254 Ditzingen (DE)
(72) Erfinder: KRAUSE, Stefan, 02681 Wilthen (DE); MACH, Patrick, 71404 Korb (DE)
(74) Vertreter: Kohler Schmid Möbus Patentanwälte
(86) Internationale Anmeldenummer: PCT/EP2022/073912
(87) Internationale Veröffentlichungsnummer: WO 2023/036640

(56) Entgegenhaltungen:
- DE-A1- 102017 213 394
- US-A1- 2021 146 423

## Beschreibung

Die Erfindung betrifft ein Verfahren zum Ausschneiden wenigstens eines Werkstücks aus einer auf einer Auflage einer Laserschneidmaschine angeordneten Blechtafel (siehe zum Beispiel DE102017213394A1, welche die Grundlage für den Oberbegriff bildet).

Laserschneidverfahren, bei welchen Werkstücke aus einer Blechtafel ausgeschnitten werden, sind grundsätzlich bekannt. Die Blechtafel wird zum Ausschneiden der Werkstücke typischerweise auf einer Auflage einer Laserschneidmaschine angeordnet. Die Auflage weist häufig voneinander beabstandete Stege auf, sodass die Blechtafel nicht flächig unterstützt wird. Es besteht daher die Gefahr, dass insbesondere kleinere Werkstücke nach dem Ausschneiden verkippen. Dies kann dazu führen, dass die Werkstücke nicht automatisiert entnommen werden können oder sich in einem Restgitter der Blechtafel verklemmen.

Aus US 2018/0093348 A1 ist es bekannt, Werkstücke nur partiell auszuschneiden, sodass sie mit einer Restgittereinheit verbunden bleiben. Die Restgittereinheit wird vollständig von der Blechtafel getrennt, sodass die Restgittereinheit samt dem bzw. den mit ihr verbundenen Bauteil(en) entnommen werden kann. Um die Verbindung zwischen dem jeweiligen Werkstück und der Restgittereinheit zu erhalten, wird der Laserstrahl unterbrochen. Die Blechtafel wird im Bereich der Verbindungen mithin nicht von dem Laserstrahl bestrahlt und bearbeitet.

Die mit dem in US 2018/0093348 A1 beschriebenen Verfahren erhaltenen Verbindungen erstrecken sich über die gesamte Dicke der Blechtafel. Solche Verbindungen werden auch als sogenannte "Microjoints" bezeichnet. Aufgrund der die gesamte Dicke der Blechtafel umfassenden Höhe der Verbindungen ist es aufwendig, die Werkstücke von der jeweiligen Restgittereinheit zu trennen. Zudem muss, nachdem der Laserstrahl zur Herstellung der Verbindungen unterbrochen wurde, erneut in die Blechtafel eingestochen werden. Dies ist einerseits zeitaufwendig. Andererseits führt ein Einstich unmittelbar am Werkstück in der Regel zu einer lokal verminderten Schnittkantenqualität. Oft darf daher nicht unmittelbar am Werkstück eingestochen werden.

### Aufgabe der Erfindung

Es ist eine Aufgabe der Erfindung, ein Verfahren anzugeben, mit welchem qualitativ hochwertige Blechwerkstücke rationell, insbesondere in einem zuverlässig automatisierbaren und einfachen Prozess, hergestellt werden können.

### Beschreibung der Erfindung

Diese Aufgabe wird erfindungsgemäß gelöst durch ein Verfahren mit den in Anspruch 1 angegebenen Merkmalen. Die Unteransprüche und die Beschreibung geben vorteilhafte Verfahrensvarianten an.

Erfindungsgemäß ist ein Verfahren zum Ausschneiden wenigstens eines Werkstücks aus einer Blechtafel vorgesehen. Die Blechtafel besteht typischerweise aus Metall. Die Blechtafel kann insbesondere aus Stahl bestehen. Eine Dicke der Blechtafel kann wenigstens 2 mm, insbesondere wenigstens 4 mm, betragen. Die Dicke der Blechtafel kann höchstens 40 mm, insbesondere höchstens 30 mm, betragen.

Das Verfahren umfasst die folgenden Schritte:
A) Anordnen einer Blechtafel auf einer Auflage einer Laserschneidmaschine;
B) Richten eines Laserstrahls auf die Blechtafel entlang eines Umrisses des Werkstücks, wobei in einem Hauptbereich des Umrisses die Blechtafel durchschnitten wird und wobei in wenigstens einem Verbindungsbereich des Umrisses zwischen dem Werkstück und einem angrenzenden Teil der Blechtafel wenigstens eine Verbindung bestehen bleibt, die eine Höhe aufweist, welche kleiner ist als eine Dicke der Blechtafel;
C) Entnehmen des wenigstens einen Werkstücks und des hiermit verbundenen angrenzenden Teils von der Auflage, wobei eine Entnahmevorrichtung eingesetzt wird;
D) Trennen des Werkstücks von dem angrenzenden Teil, wobei das Trennen erfolgt, während die zum Entnehmen im Schritt C) eingesetzte Entnahmevorrichtung das Werkstück (12) mittelbar oder unmittelbar hält.

Die Schritte A) bis D) wird grundsätzlich in der angegebenen Reihenfolge durchgeführt.

Im Schritt A) wird die Blechtafel auf die Auflage der Laserschneidmaschine aufgelegt. Die Blechtafel kann an der Auflage fixiert werden. Die Auflage weist typischerweise diskrete Auflagemittel, beispielsweise parallel und beabstandet zueinander verlaufende Stege, für eine lokal begrenzte Auflage der Blechtafel auf.

Im Schritt B) wird ein Laserstrahl auf die Blechtafel gerichtet. Der Laserstrahl kann von einem Bearbeitungskopf der Laserschneidmaschine ausgesandt werden. Der Auftreffpunkt des Laserstrahls auf die Blechtafel wird entlang eines Umrisses des Werkstücks bewegt. Hierzu kann der Bearbeitungskopf relativ zu der Auflage verfahren werden. Zusammen mit dem Laserstrahl kann ein Schneidgasstrahl, beispielsweise Stickstoff und/oder Sauerstoff, entlang des Umrisses auf die Blechtafel gerichtet werden. Der Laserstrahl und der Schneidgasstrahl können gemeinsam aus einer Schneidgasdüse des Bearbeitungskopfs austreten. Der Umriss entspricht einer Außenkontur des Werkstücks. Die Bewegung entlang des Umrisses kann geschlossen (ohne Unterbrechungen) oder in mehreren zeitlich getrennten Abschnitten erfolgen. Bei der Bewegung entlang des Umrisses wird der Laserstrahl grundsätzlich nicht ausgeschaltet. An jeder Stelle des Umrisses wird Material entfernt.

In einem Hauptbereich des Umrisses wird die Blechtafel durchschnitten. Der Hauptbereich umfasst typischerweise mehr als 90 %, bevorzugt mehr als 95 %, besonders bevorzugt mehr als 98 %, der Länge des Umrisses. In wenigstens einem Verbindungsbereich des Umrisses bleibt zwischen dem Werkstück und einem angrenzenden Teil der Blechtafel wenigstens eine Verbindung bestehen, die eine Höhe aufweist, welche kleiner ist als eine Dicke der Blechtafel. Eine solche Verbindung wird nachfolgend auch als ein "Nanojoint" oder als "Verbindung kleiner Höhe" bezeichnet. Die Verbindung wird grundsätzlich auf der vom Auftreffpunkt des Laserstrahls abgewandten Seite der Blechtafel ausgebildet. Das wenigstens eine Werkstück bleibt mit anderen Worten mit wenigstens einem weiteren Werkstück oder einem Restgitter-Teil verbunden, wobei sich die Verbindung nicht über die gesamte Dicke der Blechtafel bzw. des Werkstücks erstreckt. Durch die Verbindung mit dem angrenzenden Teil kann ein Verkippen des Werkstücks verhindert werden.

Vorzugsweise wird im Verbindungsbereich des Umrisses die Laserleistung reduziert, um die Verbindung kleiner Höhe zu erhalten. Alternativ oder zusätzlich kann eine Schneidgeschwindigkeit erhöht werden oder es kann ein Abstand zwischen einer Schneidgasdüse, durch die der Laserstrahl und ein Schneidgasstrahl auf die Blechtafel bzw. das Werkstück gerichtet werden, vergrößert werden. Durch diese Parameteränderungen wird lokal begrenzt ein vollständiges Durchschneiden der Blechtafel vermieden. Die Durchführung der Parameteränderung(en) zur Erzeugung der Verbindung kleiner Höhe kann wie in WO 2019/025327 A2 beschrieben erfolgen. Insofern wird auf die Beschreibung in WO 2019/025327 A2 Bezug genommen, wobei die hier als Verbindungen kleiner Höhe oder "Nanojoints" bezeichneten Verbindungen in WO 2019/025327 A2 als "Microjoints" bezeichnet werden.

Erfindungsgemäß wird im Schritt C) das wenigstens eine Werkstück mit dem angrenzenden Teil, welches mit dem Werkstück über die wenigstens eine Verbindung geringer Höhe verbunden ist, mittels einer Entnahmevorrichtung von der Auflage entnommen. Aufgrund der Verbindung des wenigstens einen Werkstücks und des angrenzenden Teils kann dies besonders einfach erfolgen. Eine Entnahmevorrichtung braucht nicht an jedem Werkstück anzugreifen, sondern nur an einer oder ggf. mehreren geeigneten Stellen des Verbundes, wobei die Anzahl der Angriffspunkte typischerweise kleiner ist als die Zahl der gemeinsam zu entnehmenden Werkstücke. Dies beschleunigt den Entnahmevorgang. Die Entnahmevorrichtung kann einen Vakuum-Greifer, einen Magnet-Greifer, einen Bernoulli-Greifer und/oder einen mechanischen Greifer, insbesondere einen Zangen-Greifer, aufweisen. Die Nanojoints sorgen dafür, dass die Werkstücke einerseits fest genug aneinander oder im Restgitter-Teil halten und andererseits trotzdem leicht, beispielsweise manuell, voneinander bzw. aus dem Restgitterteil vereinzelt werden können.

Sodann wird im Schritt D) das wenigstens eine Werkstück von dem angrenzenden Teil getrennt, wobei das Trennen erfolgt, während die zum Entnehmen im Schritt C) eingesetzte Entnahmevorrichtung das Werkstück mittelbar oder unmittelbar hält. Mit anderen Worten werden die Werkstücke vereinzelt. Aufgrund der geringen Höhe der Verbindung kann das Trennen besonders einfach, insbesondere mit geringem Kraftaufwand, erfolgen. Zudem wird dank der geringen Höhe der Verbindung eine weitestgehend unbeeinträchtigte Kante am freigetrennten Werkstück, d. h. ein Werkstück mit guter Qualität, erhalten. Das Trennen kann manuell erfolgen, beispielsweise durch Drücken mit den Fingern oder durch Klopfen mit einem Hammer. Vorzugsweise erfolgt das Trennen automatisiert. Wenn mehrere Werkstücke gemeinsam entnommen wurden, kann das Trennen der mehreren Werkstücke in einem einzigen Arbeitsgang erfolgen. Das Verfahren wird dadurch weiter beschleunigt. Das Trennen kann durch Rütteln, Drücken, Ausblasen oder Ziehen, insbesondere magnetisches Ziehen oder Ziehen mittels Unterdruck, erfolgen. Unter Rütteln wird hier insbesondere eine mehrfach hin- und hergehende Bewegung Verstanden. Beim Rütteln kann wenigstens ein Impuls in den Verbund eingeleitet werden.

Eine Trennvorrichtung zum Trennen des Werkstücks von dem mit ihm über den Nanojoint verbundenen Teil kann an der Entnahmevorrichtung ausgebildet, insbesondere in die Entnahmevorrichtung integriert, sein. Alternativ können die Entnahmevorrichtung und die Trennvorrichtung separat voneinander vorgesehen sein. Die Trennvorrichtung kann beispielsweise eine Ausdrückvorrichtung mit einem, insbesondere durch einen Pneumatikzylinder, bewegbaren Ausdrückstift sein. Für ein Trennen durch Rütteln ist nicht notwendigerweise eine eigene Trennvorrichtung erforderlich. Der über die Verbindungen kleiner Höhe zusammengehaltene Verbund kann beispielsweise von der Entnahmevorrichtung geschüttelt werden, sodass sich das wenigstens eine Werkstück von dem angrenzenden Teil löst. Die Nanojoints brechen dabei auf.

Für die Vereinzelung kann die Entnahmevorrichtung mit dem das Werkstück enthaltenden Verbund über eine Fertigteilablage fahren. Nach dem Vereinzeln befinden sich die Gutteile auf bzw. in der Fertigteilablage. Ein ggf. verbleibendes Restgitter-Teil kann auf einer separaten Ablage abgelegt werden.

Das erfindungsgemäße Verfahren hat zudem den Vorteil, dass der Schnittspalt, in dem der Nanojoint angeordnet wird, sehr schmal sein kann. Insbesondere wenn mehrere Werkstücke gemeinsame Trennschnitte aufweisen und durch die Verbindungen untereinander gemeinsam als Verbund auf der Auflage gehalten werden sollen (damit die einzelnen Teile nicht verkippen), so lässt sich dies nur über einen Nanojoint realisieren. Beim Erzeugen von Microjoints (welche sich über die gesamte Dicke der Blechtafel bzw. des Werkstücks erstrecken) muss der Laserstrahl ausgeschaltet werden, so dass nachfolgend zum weiteren Schneiden zwischen den Werkstücken ein Einstich unmittelbar an diesen Gutteilen erfolgen müsste, was regelmäßig nicht möglich ist. Der schmale Schnittspalt weist außerdem den Vorteil auf, dass ein Vakuumsauger (Vakuum-Greifer) einer Entnahmevorrichtung nicht unbedingt entweder in einem Restgitterbereich ohne Schnittlinien oder an einem genügend großen Werkstück angreifen müsste, sondern sich über den Schnittspalt hinweg erstrecken könnte, ohne dass die Saugwirkung zu gering wird. Auf diese Weise ist es nicht unbedingt nötig, spezielle Bereiche für die Saugerpositionierung vorzusehen.

Eine Höhe der Verbindung kleiner Höhe kann höchstens ein Drittel, bevorzugt höchstens ein Viertel, besonders bevorzugt höchstens ein Sechstel der Dicke der Blechtafel betragen. Typischerweise beträgt die Höhe der Verbindung wenigstens ein Zwanzigstel, insbesondere wenigstens ein Zehntel, der Dicke der Blechtafel. Eine entlang des Umrisses gemessene Länge der Verbindung kleiner Höhe kann höchstens die Hälfte und/oder wenigstens ein Achtel, insbesondere wenigstens ein Viertel, der Dicke der Blechtafel betragen. Mit einer derart bemessenen Verbindung kann das Werkstück einerseits sicher gehalten und andererseits einfach vereinzelt werden.

Bei einer vorteilhaften Verfahrensvariante wird im Schritt B) eine Gruppe von Werkstücken gebildet, die über Verbindungen kleiner Höhe an wenigstens einer gemeinsamen Umrisslinie der Werkstücke miteinander verbunden sind. Die Werkstücke weisen mit anderen Worten gemeinsame Schnittkanten auf, wobei in jeder gemeinsamen Schnittkante mindestens ein Nanojoint angeordnet ist. Eine solche Gruppe von Werkstücken kann auch als ein "Nest" bezeichnet werden. Diese Variante macht sich zunutze, dass nach dem Erstellen der Verbindung kleiner Höhe nicht erneut eingestochen werden muss. Die Verbindung kann daher zwischen zwei Werkstücken (Gutteilen) ausgebildet werden. Die gemeinsame Umrisslinie ermöglicht zudem eine besonders platzsparende Anordnung der Werkstücke auf der Blechtafel.

Die Gruppe von Werkstücken kann einen umlaufenden Außenumriss aufweisen, der durch Umrisslinien der Werkstücke gebildet ist, entlang denen die Blechtafel durchschnitten wird. Der Außenumriss kann mit anderen Worten durch Hauptbereiche der Umrisse der mehreren Werkstücke gebildet werden. So wird ein "Nest" untereinander verbundener Werkstücke erhalten, das insgesamt vollständig vom Restgitter freigeschnitten wird. Die Gruppe von Werkstücken (das Nest) kann als eine Einheit - d. h. ohne Restgitterteile als Ballast - aus der Blechtafel entnommen werden.

Im Schritt C) kann eine Entnahmevorrichtung an einem der Werkstücke der Gruppe angreift. Da die Tragkraft einer Entnahmevorrichtung begrenzt ist, können auf diese Weise in einem Schritt mehr Werkstücke (Gutteile) gemeinsam entnommen werden. Das maximale Teilegewicht für das Nest beträgt dabei vorzugsweise 100 kg. Die maximale Größe des Nests kann 1000 mm x 1500 mm betragen.

Im Schritt B) kann neben dem wenigstens einen Werkstück wenigstens ein Blechteil aus der Blechtafel ausgeschnitten werden, welches im Schritt C) unabhängig von dem wenigstens einen Werkstück und dessen angrenzendem Teil einzeln entnommen wird. Dies ermöglicht eine flexible Nutzung der Blechtafel insbesondere zum Herstellen großer Blechteile, die nicht fixiert werden müssen und einzeln gehandhabt werden können, wie auch kleinerer oder langgestreckter Werkstücke, die fixiert werden müssen und zweckmäßigerweise in einem Verbund entnommen werden.

Bei einer vorteilhaften Verfahrensvariante wird im Schritt B) eine Gruppe von Werkstücken gebildet, die jeweils über wenigstens eine Verbindung kleiner Höhe mit einem gemeinsamen Restgitter-Teil verbunden bleiben. Im Schritt C) können die mehreren Werkstücke und das angrenzende Restgitter-Teil gemeinsam entnommen werden. Diese Variante eignet sich besonders für kleine Werkstücke, die nicht unmittelbar aneinander angrenzend angeordnet werden können.

Vorzugsweise wird das Restgitter-Teil vor Schritt C), insbesondere entlang einer umlaufenden Kontur, von der Blechtafel freigeschnitten. Falls das Restgitter-Teil am Rand der Blechtafel angeordnet ist, kann sich die Kontur zum Freischneiden zwischen Randpunkten der Blechtafel erstrecken. Die Kontur kann konkav sein. Derart können mehrere (insbesondere kleinere und/oder schlanke) Werkstücke, die durch Nanojoints mit dem Restgitter-Teil verbunden bleiben, zwischen größere Werkstücke bzw. Blechteile, die nicht durch Nanojoints stabilisiert werden müssen, auf der Blechtafel verteilt und von einer durchgehenden Schnittlinie entlang der Kontur umgeben werden. Die Form der Kontur, welche die mehreren Werkstücke der Gruppe umgibt, kann im Wesentlichen frei gewählt werden. Insbesondere kann nicht-quadratisches und insbesondere auch nichtrechteckiges Restgitter-Teil von der übrigen Blechtafel abgetrennt werden. Auf diese Weise ist eine materialeffiziente Schachtelung der Werkstücke möglich. Die Anordnung der kleineren Werkstücke kann sich nach dem auf der Blechtafel zwischen den größeren Blechteilen verfügbaren Platz richten. Die Kontur um die Gruppe der mehreren Werkstücke herum wird dann entsprechend gewählt. Um die mehreren Werkstücke herum wird mit anderen Worten ein Restgitter-Teil gebildet, das eine beliebige Form aufweisen kann und insbesondere nicht rechteckig sein muss. Dieses Restgitter-Teil wird von der Blechtafel freigeschnitten und mit den darin enthaltenen Werkstücken gemeinsam entnommen.

Ein kleinster Abstand der Kontur von den Werkstücken der Gruppe kann wenigstens 12 mm betragen. Vorzugsweise ist der kleinste Abstand größer als die Dicke der Blechtafel, insbesondere wenn die Dicke der Blechtafel mehr als 15 mm beträgt. Dadurch kann vermieden werden, dass sich das Restgitter-Teil durch den Wärmeeintrag des Laserschneidens aufwölbt.

Das Restgitter-Teil kann Angriffsflächen für Greifer einer Entnahmevorrichtung aufweisen, insbesondere für Vakuum-Greifer. In die Angriffsflächen werden grundsätzlich keine Schnittlinien eingebracht. Besonders bevorzugt bleibt auf dem Restgitter-Teil wenigstens eine Angriffsfläche für eine Entnahmevorrichtung von wenigstens 120 mm im Durchmesser von Werkstücken frei. Dies ermöglicht eine sichere Handhabung auch von größeren Verbünden.

Im Schritt C) kann eine Entnahmevorrichtung an dem Restgitter-Teil angreifen. Dies vereinfacht die Entnahme bei sehr kleinen Werkstücken. Zudem wird eine Beschädigung der Werkstücke durch die Entnahmevorrichtung vermieden. Wenn das Trennen der Werkstücke von dem Restgitter-Teil erfolgt, während eine Entnahmevorrichtung an dem Restgitter-Teil angreift, kann durch Messen des von der Entnahmevorrichtung gehaltenen Gewichts festgestellt werden, ob alle Werkstücke aus dem Restgitter-Teil herausgelöst wurden.

Bevorzugt ist das Restgitter-Teil nicht kleiner als 30 mm x 80 mm und nicht größer als 1000 mm x 1500 mm. Ein derart bemessenes Restgitter-Teil kann von einer automatisierten Entnahmevorrichtung gut entnommen werden. Das Maximalgewicht des Restgitter-Teils mitsamt der an ihm gehaltenen Werkstücke beträgt vorzugsweise maximal 100 kg.

Das Restgitter-Teil mit den darin umfassten und über Nanojoints mit ihm verbundenen Werkstücken kann am Rand der Blechtafel angeordnet werden. So kann der bisher üblicherweise ungenutzt bleibende Rand der Blechtafel (typische Randbreite von 10 mm) einerseits zum Fixieren der Werkstücke für die Entnahme und andererseits als Angriffspunkt für eine Entnahmevorrichtung genutzt werden.

Wenn eine Entnahmevorrichtung zur Entnahme des Verbundes an den Werkstücken angreift, dann sollten an diesen Werkstücken mindestens zwei Nanojoints gegenüberliegend angebracht werden. So wird das Gewicht des zu entnehmenden Verbundes auf wenigstens zwei Nanojoints verteilt. Die Gefahr, dass diese vorzeitig brechen wird dadurch verringert.

Der bzw. die Angriffspunkte der Entnahmevorrichtung werden vorzugsweise so positioniert, dass der zu entnehmende Verbund bei der Entnahme nicht verkippen kann. Der Angriffspunkt kann im Schwerpunkt des Verbundes liegen. Dann genügt prinzipiell ein Greifer. Zwei Angriffspunkte können in gegenüberliegende Ecken des Verbundes oder auf gegenüberliegenden Seiten einer Achse durch den Schwerpunkt des Verbundes liegen. In diesen Fällen sind mindestens zwei Greifer notwendig.

Die Auflage für die Blechtafel kann parallel zueinander verlaufende Stege aufweisen. In diesem Fall erhält ein Werkstück, das schmaler ist als ein Abstand zwischen zwei benachbarten Stegen der Auflage zumindest dann zwei Verbindungen kleiner Höhe, wenn eine Schmalseite des Werkstücks quer zu den Stegen ausgerichtet ist. Mit anderen Worten werden zwei Nanojoints vorgesehen, wenn die lange Seite des Werkstücks (näherungsweise) parallel zu den Stegen verläuft. Das Werkstück ist typischerweise wenigstens 100 mm lang. Durch die wenigstens zwei Nanojoints wird das schlanke Werkstück stabilisiert, falls es in einer kippgefährdeten Lage ausgeschnitten wird. Bevorzugt wird eine erste der Verbindungen kleiner Höhe an einer Schmalseite des Werkstücks angeordnet. Besonders bevorzugt wird eine zweite der Verbindungen kleiner Höhe an einer Längsseite des Werkstücks angeordnet, insbesondere um wenigstens 60 % einer Länge des Werkstücks von der ersten Verbindung entfernt. Derart kann das Werkstück wirksam stabilisiert werden. Insbesondere kann ein Durchhängen des Werkstücks vermieden werden, das die Entnahme erschweren oder unmöglich machen könnte.

Erfindungsgemäß erfolgt das Trennen im Schritt D), während eine zum Entnehmen im Schritt C) eingesetzte Entnahmevorrichtung das Werkstück mittelbar oder unmittelbar hält. Dies kann den apparativen Aufwand zum Vereinzeln der Werkstücke reduzieren. Insbesondere kann auf zusätzliche Einrichtungen zum Trennen des Werkstücks von dem angrenzenden Teil verzichtet werden, wenn die Entnahmevorrichtung den Verbund mit dem Werkstück zum Trennen rüttelt. Auch ein Ausdrücken ("Auspinnen") des Werkstücks kann in einfacher Weise erfolgen, während die Entnahmevorrichtung den Verbund mit dem Werkstück hält. Ein beweglicher Ausdrückstift kann an der Entnahmevorrichtung, insbesondere an einem Greifer der Entnahmevorrichtung, angeordnet sein.

Weitere Merkmale und Vorteile der Erfindung ergeben sich aus den Ansprüchen, der Beschreibung und der Zeichnung. Erfindungsgemäß können die vorstehend genannten und die noch weiter ausgeführten Merkmale jeweils einzeln für sich oder zu mehreren in beliebigen, zweckmäßigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen beschrieben. Es zeigen:
- Fig. 1: eine zum Durchführen des erfindungsgemäßen Laserschneidverfahrens eingerichtete Laserschneidmaschine;
- Fign. 2a, 2b: ein aus einer Blechtafel lasergeschnittenes Werkstück, das durch Nanojoints an einem angrenzenden Teil gehalten ist, in einer Draufsicht (Fig. 2a) und in einer Schnittansicht (Fig. 2b) entsprechend Ilb-Ilb in Fig. 2a;
- Fig. 3: eine Blechtafel mit vier Gruppen von Werkstücken, die jeweils mit einem gemeinsamen Restgitter-Teil der Gruppe über einen Nanojoint verbunden sind, während eines erfindungsgemäßen Verfahrens in einer schematischen Draufsicht;
- Fig. 4: eine Blechtafel mit zwei Gruppen von Werkstücken, die jeweils mit einem gemeinsamen Rest-Teil der Gruppe über einen Nanojoint verbunden sind, sowie mit weiteren einzelnen ausgeschnittenen Blechteilen, während eines erfindungsgemäßen Verfahrens in einer schematischen Draufsicht;
- Fig. 5: eine weitere Blechtafel mit zwei Gruppen von Werkstücken, die jeweils mit einem gemeinsamen Rest-Teil der Gruppe über einen Nanojoint verbunden sind, sowie mit weiteren einzelnen ausgeschnittenen Blechteilen, während eines erfindungsgemäßen Verfahrens in einer schematischen Draufsicht;
- Fig. 6: eine Blechtafel mit einer Gruppe von untereinander über Nanojoints verbundenen Werkstücken, während eines erfindungsgemäßen Verfahrens in einer schematischen Draufsicht;
- Fig. 7: ein schematisches Ablaufdiagramm eines erfindungsgemäßen Verfahrens.

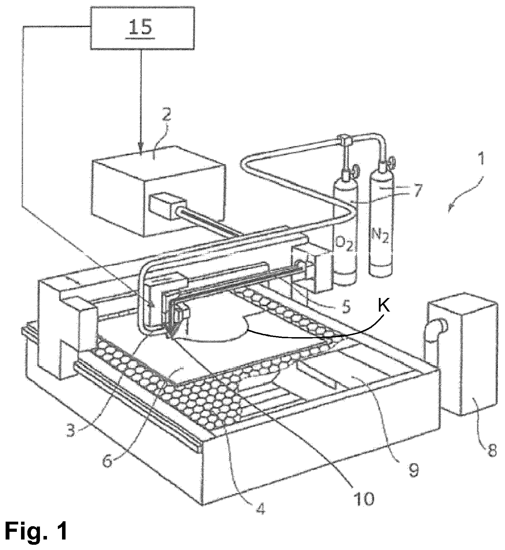

Die in **Figur 1** perspektivisch dargestellte Laserschneidmaschine **1** weist beispielsweise einen CCVLaser, Diodenlaser oder Festkörperlaser als Laserstrahlerzeuger **2,** einen verfahrbaren (Laser)Bearbeitungskopf **3** und eine Auflage **4** auf. Im Laserstrahlerzeuger 2 wird ein Laserstrahl **5** erzeugt, der mittels eines (nicht gezeigten) Lichtleitkabels oder (nicht gezeigten) Umlenkspiegeln vom Laserstrahlerzeuger 2 zum Bearbeitungskopf 3 geführt wird. Auf der Auflage 4 ist eine Blechtafel **6** angeordnet. Der Laserstrahl 5 wird mittels einer im Bearbeitungskopf 3 angeordneten Fokussieroptik auf die Blechtafel 6 gerichtet. Die Laserschneidmaschine 1 wird darüber hinaus mit Schneidgasen **7,** beispielsweise Sauerstoff und Stickstoff, versorgt. Die Verwendung des jeweiligen Schneidgases 7 ist vom Material der Blechtafel 6 und von Qualitätsanforderungen an die Schnittkanten abhängig. Weiterhin ist eine Absaugeinrichtung **8** vorhanden, die mit einem Absaugkanal **9,** der sich unter der Auflage 4 befindet, verbunden ist. Das Schneidgas 7 wird einer Schneidgasdüse **10** des Bearbeitungskopfes 3 zugeführt, aus der es zusammen mit dem Laserstrahl 5 austritt.

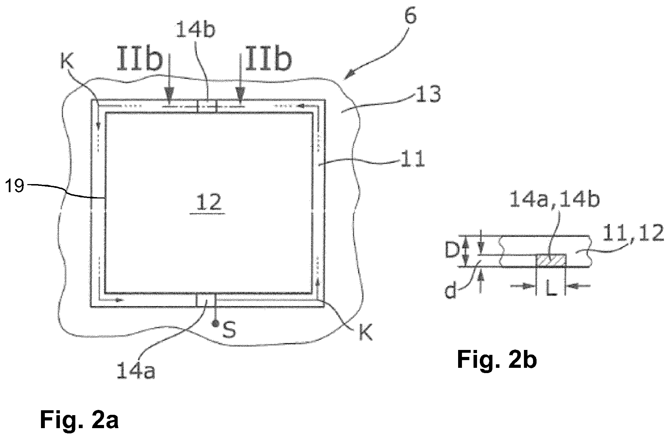

Beim Laserschneiden wird die Blechtafel 6 entlang einer gewünschten Bahnkurve **K,** die Teil eines Umrisses eines auszuschneidenden Werkstücks ist, mittels eines Laserstrahls 5 mit einer zum Durchschneiden der Blechtafel ausreichenden, höheren Laserleistung (Schneidleistung) geschnitten, wobei vorliegend der Laserstrahl 5, alternativ oder zusätzlich aber auch die Blechtafel 6, bewegt wird. Dazu muss zunächst auf oder neben der zu schneidenden Bahnkurve K an einem Punkt **S** in die Blechtafel 6 eingestochen werden, wie in **Figur 2a** gezeigt ist.

Wie in den **Figuren 2a, 2b** gezeigt, werden beim Laserschneiden der Blechtafel 6 in einem Schnittspalt **11** zwischen einem lasergeschnittenen Werkstück **12** und einem angrenzenden Teil **13** der Blechtafel 6 Verbindungen **14a, 14b** in Form von Stegen bzw. Nanojoints stehen gelassen, die das Werkstück 12 am angrenzenden Teil 13 fixieren und somit ein Verkippen gegenüber dem angrenzenden Teil 13 bzw. der Auflage 4 verhindern. Zudem können aufgrund der Verbindungen 14a, 14b das Werkstück 12 und das angrenzende Teil 13 im Verbund gehandhabt werden.

Wie in Fig. 2b gezeigt, erstreckt sich der Nanojoint 14a, 14b nicht über die gesamte Dicke **D** der Blechtafel 6, sondern nur im unteren Drittel, weist also eine geringere Höhe **d** als die Dicke D auf. Daher wird der Nanojoint hier auch als eine Verbindung 14a, 14b kleiner Höhe bezeichnet. Eine Länge **L** des Nanojoints 14a, 14b ist entlang des Schnittspalts 11 kleiner als die Dicke D; vorzugsweise beträgt die Länge L des Nanojoints 14a, 14b weniger als die Hälfte der Dicke D.

Der Nanojoint 14a befindet sich in Figur 2a am Schnittende, wird also erzeugt, kurz bevor der Startpunkt S der in sich geschlossenen Bahnkurve K wieder erreicht ist. Der Nanojoint 14b befindet sich dagegen nicht am Schnittende, sondern an einem beliebigen Teil der Bahnkurve K. Der Längenbereich der Bahnkurve K, in welchem die Nanojoints 14a, 14b ausgebildet werden, wird hier auch als ein Verbindungsbereich des Umrisses **19** des Werkstücks 12 bezeichnet. Der Längenbereich der Bahnkurve K, in welchem die Blechtafel 6 vollständig durchschnitten wird, wird auch als ein Hauptbereich des Umrisses des Werkstücks 12 bezeichnet.

Im Folgenden wird das Erstellen der Verbindungen 14a, 14b am Beispiel der Variation der Laserleistung beschrieben. Bei dieser Variante des Verfahrens werden die Nanojoints 14a, 14b allein durch gezieltes Anpassen der Laserleistung während des Schneidprozesses mittels geeignet gewählter Leistungsgradienten generiert, die von einer in Fig. 1 gezeigten Steuerung **15** der Laserschneidmaschine 1 in Abhängigkeit des Werkstückmaterials vorgegeben werden. Die Steuerung 15 steuert auch die Bewegung des Bearbeitungskopfes 3 gegenüber der Blechtafel 6. Dem Schneidprozess steht durch die abgesenkte Laserleistung nicht mehr die für einen vollständigen Schnitt benötigte Streckenenergie zur Verfügung, sodass das Material nicht über die komplette Dicke D der Blechtafel 6 aufgeschmolzen wird und im unteren Bereich des Schnittspalts 11 bzw. der Schnittkante ein Nanojoint 14a, 14b zwischen dem lasergeschnittenen Werkstück 12 und dem angrenzenden Teil 13 stehen bleibt.

Bis auf die Laserleistung bleiben bei der Erzeugung des Nanojoints 14a, 14b alle anderen Schneidparameterdes Laserschneidens unverändert, also z. B. die Fokuslage des Laserstrahls 5, der Abstand der Schneidgasdüse 10 zur Werkstückoberfläche, der Schneidgasdruck und die Schneidgeschwindigkeit. Nach der Erzeugung des Nanojoints 14b wird mit den Standardparametern weitergeschnitten. Nach der Erzeugung des Nanojoints 14a kann der Laserstrahl 5 ausgeschaltet werden. Alternativ kann ein weiteres Werkstück ausgeschnitten werden.

Zum Erzeugen des nicht am Ende der Bahnkurve K liegenden Nanojoints 14b mit einer geringeren Höhe d als die Werkstückdicke D wird beim Laserschneiden der Blechtafel 6 die Laserleistung des Laserstrahls 5 auf einem der Länge L des Nanojoints 14 entsprechenden Teilstück der Bahnkurve K von der zum Durchschneiden der Blechtafel 6 ausreichenden, höheren Laserleistung (Schneidleistung) auf eine zum vollständigen Durchschneiden der Blechtafel 6 nicht ausreichende, niedrigere Laserleistung (Senkleistung) abgesenkt und anschließend wieder auf die höhere Laserleistung (Schneidleistung) erhöht. Bei der Bearbeitung mit der niedrigen Laserlesitung (Senkleistung) wird oberhalb der Nanojoints 14a, 14b eine Einsenkung in der Blechtafel 6 erzeugt.

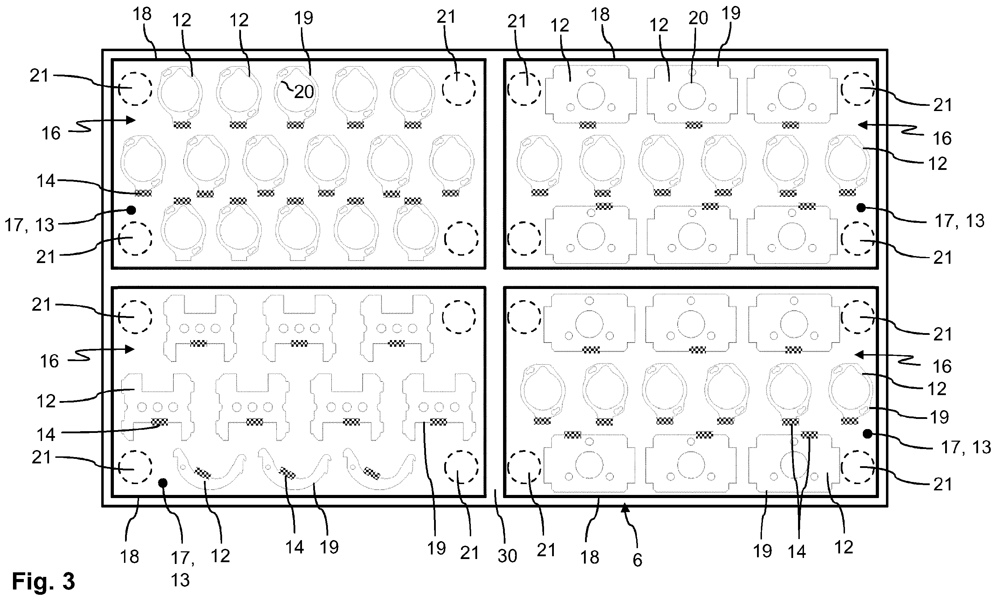

**Figur 3** zeigt eine Blechtafel 6, aus der vier Gruppen **16** von Werkstücken 12 ausgeschnitten wurden. Jede Gruppe 16 umfasst eine Mehrzahl von Werkstücken 12 und ein Restgitter-Teil **17,** welches ein angrenzendes Teil 13 für die Werkstücke der Gruppe 16 darstellt. Alle Werkstücke 12 einer Gruppe 16 können gleichartig sein. Alternativ kann eine Gruppe 16 unterschiedliche Werkstücke 12 enthalten. Die Werkstücke 12 einer Gruppe 16 sind jeweils über wenigstens einen (abstrakt durch ein Schachbrettmuster angedeuteten) Nanojoint 14 mit dem zugehörigen Restgitter-Teil 17 verbunden. Es versteht sich, dass die Verbindungen 14 in der Praxis kleiner ausgeführt werden als es hier aus Gründen der Sichtbarkeit schematisch skizziert ist. Die Restgitter-Teile 17 sind jeweils entlang einer umlaufenden Kontur **18** von der Blechtafel 6 freigeschnitten. Die Restgitter-Teile 17 sind hier beispielhaft rechteckig.

Die Werkstücke 12 können innerhalb ihres jeweiligen Umrisses **19** geschnittene Innenkonturen **20** aufweisen. Es ist denkbar, bei hinreichend großen von den Innenkonturen 20 umfassten Bereichen innerhalb der Innenkonturen 19 weitere, kleinere Werkstücke auszuscheiden, und über Nanojoints mit den Werkstücken 12 zu verbinden (nicht näher dargestellt).

An den Restgitter-Teilen 17 können Angriffsflächen **21** für Greifer einer nicht näher dargestellten Entnahmevorrichtung vorgesehen sein. Die Angriffsflächen 21 können beispielsweise einen Durchmesser von mehr als 120 mm besitzen. Vorliegend sind die Angriffsflächen 21 in Ecken der Restgitter-Teile 17 angeordnet. Innerhalb der Angriffsflächen 21 sind keine Schnittlinien vorgesehen. Vakuum-Greifer können daher die Restgitter-Teile 17 im Bereich der Angriffsflächen 21 ansaugen. Sodann kann das jeweilige Restgitter-Teil 17 mitsamt den daran gehaltenen Werkstücken 12 aus dem verbleibenden Restteil **30** der Blechtafel 6 entnommen werden.

Zum Vereinzeln der Werkstücke 12 kann die Entnahmevorrichtung das jeweilige Restgitter-Teil 17 schütteln bzw. rütteln (ruckartig hin und her bewegen). Aufgrund der dabei erzeugten dynamischen Lasten brechen die Verbindungen 14. Die Werkstücke 12 fallen aus dem Restgitter-Teil 17 heraus und können beispielsweise in einem Auffangbehälter gesammelt werden. Die Gewichtsabnahme beim Herauslösen der Werkstücke 12 kann von der Entnahmevorrichtung gemessen werden, sodass die Vollständigkeit der Vereinzelung überprüft werden kann.

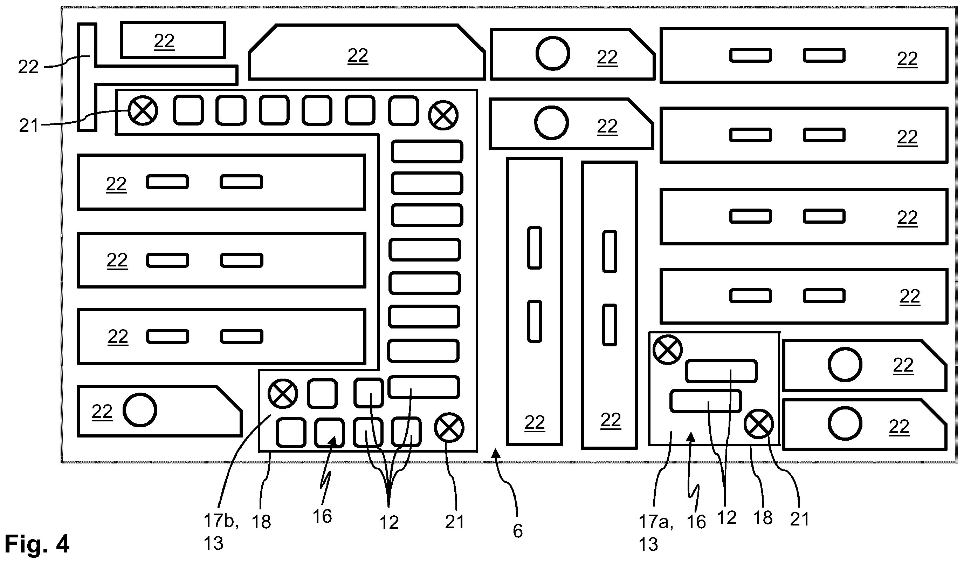

**Figur 4** zeigt eine Blechtafel 6, aus der mehrere größere Blechteile **22** sowie zwei Gruppen 16 von je mehreren kleineren Werkstücken 12 ausgeschnitten wurden. Die Blechteile 22 sind jeweils vollständig freigeschnitten und werden je einzeln entnommen. Die Werkstücke 12 der beiden Gruppen 16 sind über in Figur 4 nicht näher dargestellte Nanojoints mit einem jeweiligen Restgitter-Teil **17a, 17b** verbunden (vergleiche hierzu die vorstehende Beschreibung zu Figur 3). Die Restgitter-Teile 17a, 17b können wiederum Angriffsflächen 21 für Greifer einer Entnahmevorrichtung aufweisen.

Eine umlaufende Kontur 18 des in Figur 4 rechts unten angeordneten Restgitter-Teils 17a ist rechteckig. Zwei Angriffsflächen 21 können in gegenüberliegenden Ecken vorgesehen sein.

Das in Figur 4 linke Restgitter-Teil 17b weist eine komplexe Kontur 18 auf. Hier ist das Restgitter-Teil 17b näherungsweise C-förmig und weist einen konkaven Abschnitt auf. Angriffsflächen 21 können im Bereich der Enden der drei Schenkel der C-Form vorgesehen sein.

Die Anordnung der Werkstücke 12, welche in den Gruppen 16 über Nanojoints mit dem jeweiligen Restgitter-Teil 17a, 17b verbunden sind, ist vorliegend so gewählt, dass die Fläche der Blechtafel 6 zur Herstellung der Blechteile 22 und der Werkstücke 12 möglichst weitgehend ausgenutzt wird. Die umlaufenden Konturen 18 der Restgitter-Teile 17a, 17b wurden so gewählt, dass die Werkstücke 12 zweckmäßig in den Gruppen 16 zusammengefasst sind.

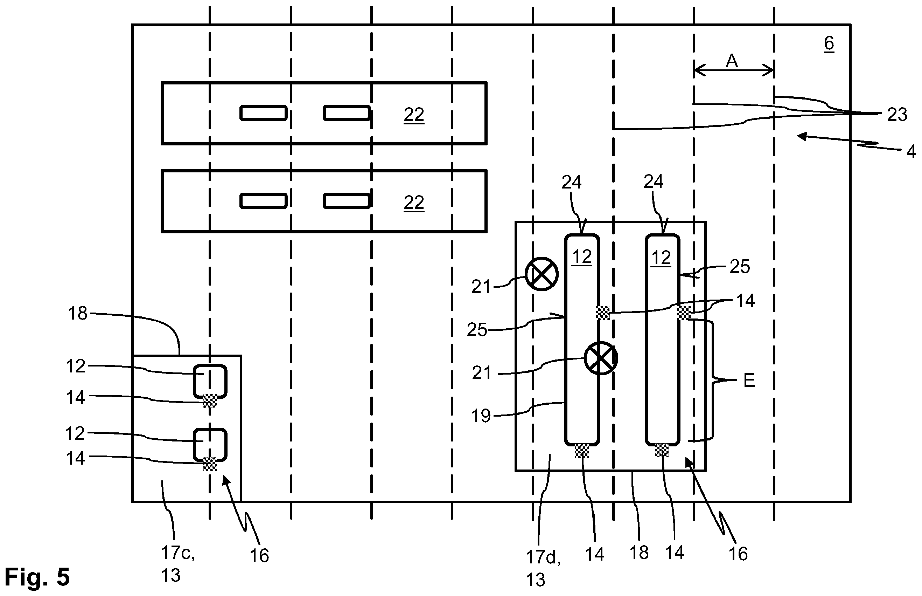

**Figur 5** zeigt eine Blechtafel 6, die auf parallel zueinander verlaufenden Stegen **23** einer Auflage 4 einer Laserschneidmaschine 1 (vergleiche Figur 1) aufliegt. Zwei größere Blechteile 22 sind vollständig freigeschnitten. Ferner sind hier beispielhaft zwei Gruppen 16 von mehreren Werkstücken 12 dargestellt.

Die in Figur 5 links unten dargestellte Gruppe 16 umfasst beispielhaft zwei kleine Werkstücke 12, die über je einen Nanojoint 14 mit einem Restgitter-Teil **17c** verbunden sind. Das Restgitter-Teil 17c ist unmittelbar am Rand der Blechtafel 6 angeordnet. Eine Kontur 18 des Restgitter-Teils 17c erstreckt sich zwischen zwei Außenseiten der Blechtafel 6. Der dem Rand zuweisende Bereich des Restgitter-Teils 17c kann als Angriffsfläche zur Handhabung des Verbundes der beiden Werkstücke 12 und des Restgitter-Teils 17c genutzt werden.

Die in Figur 5 rechts der Mitte dargestellte Gruppe 16 umfasst beispielhaft zwei schlanke (langgestreckte) Werkstücke 12, die über je zwei Nanojoints 14 mit einem Restgitter-Teil **17d** verbunden sind. Schmalseiten **24** der beiden Werkstücke 12 sind kürzer als ein Abstand **A** zwischen benachbarten Stegen 23 der Auflage 6. Obgleich Längsseiten **25** der beiden Werkstücke 12 länger sind als der Abstand A, könnten die schlanken Werkstücke 12 bei der vorliegenden Ausrichtung mit zu den Stegen 23 parallelen Längsseiten 25 zwischen die Stege 23 kippen bzw. fallen. Um dies zu verhindern, sind sie mit den Nanojoints 14 am Restgitter-Teil 17d fixiert. Je einer der Nanojoints 14 ist dabei an einer Schmalseite 24 angeordnet. Der zweite der Nanojoints 14 ist jeweils an einer Längsseite 25 angeordnet. Eine Entfernung **E** zwischen den beiden Nanojoints eines jeweiligen Werkstücks 12 kann wenigstens zwei Drittel der Länge des Werkstücks betragen.

Angriffsflächen 21 für Greifer einer Entnahmevorrichtung können auf dem Restgitter-Teil 17d vorgesehen sein. Wenn der Schnittspalt entlang des Umrisses 19 der Werkstücke 12 hinreichend schmal ist, ist es auch denkbar, dass sich Angriffspunkte 21 sowohl auf einem der Werkstücke 12 als auch auf dem angrenzenden Restgitter-Teil 17d erstrecken.

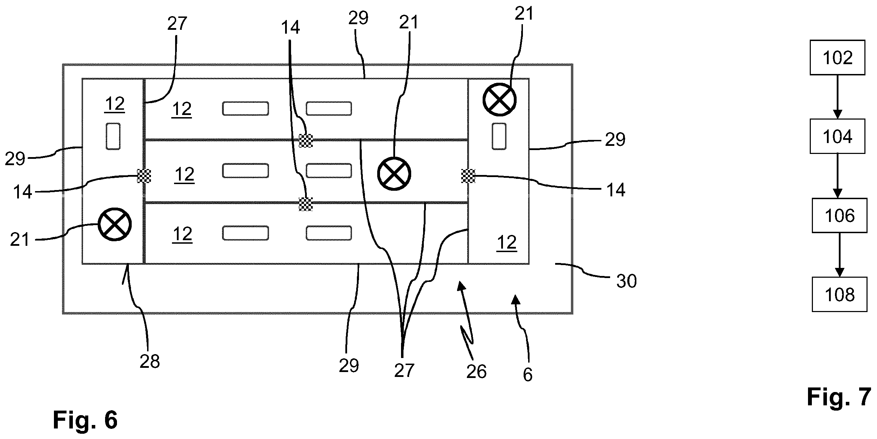

**Figur 6** zeigt eine Blechtafel 6 mit einer Gruppe **26** von untereinander über Nanojoints 14 verbundenen Werkstücken 12. Benachbarte Werkstücke 12 weisen hier gemeinsame Umrisslinien **27** auf. Entlang einer der gemeinsamen Umrisslinien 27 grenzen je wenigstens zwei der Werkstücke 12 aneinander. Der Umriss eines jeden der Werkstücke enthält wenigstens eine der gemeinsamen

Umrisslinien 27. Hauptbereiche der gemeinsamen Umrisslinien 27 werden beim Ausschneiden der Werkstücke 12 durchtrennt. In Verbindungsbereichen der gemeinsamen Umrisslinien 27 bleiben Nanojoints 14 bestehen. Über die Nanojoints 14 werden die Werkstücke 12 zusammengehalten. Der Verbund der unmittelbar miteinander verbundenen Werkstücke 12 wird hier auch als ein Nest bezeichnet.

Die Gruppe 26 der Werkstücke 12 weist insgesamt einen umlaufenden Außenumriss **28** auf. Der Außenumriss 28 ist durch freie Umrisslinien **29** der Werkstücke 12 gebildet. An die freien Umrisslinien 29 grenzen keine weiteren Werkstücke 12 der Gruppe 26 an. Die freien Umrisslinien 29 sind Teil des Umrisses der im Nest außen angeordneten Werkstücke 12.

Entlang des Außenumrisses 28 wird die Blechtafel 6 vollständig durchschnitten. Die Gruppe 26 kann daher aus einem Restteil **30** der Blechtafel 6 entnommen werden. Greifer einer Entnahmevorrichtung können hierzu unmittelbar an einem oder mehreren der Werkstücke 12 angreifen. In Figur 6 sind beispielhaft drei näherungsweise auf einer Diagonalen durch die Gruppe 26 liegende Angriffsflächen 21 für Vakuum-Greifer markiert.

**Figur 7** zeigt ein zusammenfassendes Ablaufdiagramm eines Verfahrens zum Ausschneiden wenigstens eines Werkstücks, vorzugsweise mehrere Werkstücke aus einer Blechtafel. In einem Schritt **102** wird die Blechtafel auf einer Auflage einer Laserschneidmaschine angeordnet.

Sodann erfolgt in einem Schritt **104** eine Laserbearbeitung. Hierzu wird ein Laserstrahl auf die Blechtafel gerichtet. Ein Auftreffpunkt des Laserstrahls wird entlang eines Umrisses des wenigstens einen Werkstücks bewegt. In einem Hauptbereich des Umrisses eines jeden Werkstücks wird die Blechtafel vollständig durchschnitten. In wenigstens einem Verbindungsbereich des Umrisses eines jeden Werkstücks wird die Laserbearbeitung so gesteuert, dass eine Verbindung zwischen dem Werkstück und einem angrenzenden Teil der Blechtafel bestehen bleibt. Diese Verbindung weist eine Höhe auf, die kleiner ist als die Dicke der Blechtafel. Zum Erzeugen der Verbindung kleiner Höhe (des sogenannten Nanojoints) kann die Laserleistung reduziert werden. Das angrenzende Teil kann ein weiteres Werkstück oder ein Restgitter-Teil sein.

In einem nachfolgenden Schritt **106** wird der Verbund des wenigstens einen Werkstücks und des angrenzenden Teils mittels einer Entnahmevorrichtung von der Auflage entnommen. Eine Gruppe von Werkstücken, welche gegebenenfalls ein Restgitter-Teil umfasst, kann zuvor im Schritt 104 von einem Restteil der Blechtafel freigeschnitten worden sein.

Schließlich wird in einem Schritt **108** das wenigstens eine Werkstück von dem angrenzenden Teil getrennt, wobei das Trennen erfolgt, während die zum Entnehmen im Schritt **106** eingesetzte Entnahmevorrichtung das Werkstück mittelbar oder unmittelbar hält. Insbesondere werden alle Werkstücke des Verbunds voneinander und einem gegebenenfalls vorhandenen Restgitter-Teil vereinzelt.

### Bezugszeichenliste

Laserschneidmaschine **1**
Laserstrahlerzeuger **2**
Bearbeitungskopf **3**
Auflage **4**
Laserstrahl **5**
Blechtafel **6**
Schneidgasen **7**
Absaugeinrichtung **8**
Absaugkanal **9**
Schneidgasdüse **10**
Schnittspalt **11**
Werkstück **12**
angrenzendes Teil **13**
Verbindungen (Nanojoints) **14; 14a, 14b**
Steuerung **15**
Gruppe **16** mit Werkstücken 12 und Restgitter-Teil
Restgitter-Teil **17; 17a, 17b; 17c, 17d**
Kontur **18** eines Restgitter-Teils
Umriss **19**
Innenkontur **20**
Angriffsflächen **21**
Blechteile **22**
Stege **23**
Schmalseiten **24**
Längsseiten **25**
Gruppe **26** von untereinander verbundenen Werkstücken 12
gemeinsame Umrisslinien **27**
Außenumriss **28**
freie Umrisslinien **29**
Restteil **30**
Bahnkurve **K**
Einstech-Punkt **S**
Dicke **D** der Blechtafel 6
Höhe **d** der Verbindungen 14; 14a, 14b
Länge **L** der Verbindungen 14; 14a, 14b
Abstand **A** zwischen Stegen 23
Entfernung **E**
Anordnen **102**
Laserbearbeiten **104**
Entnehmen **106**
Trennen **108**

## Patentansprüche

1. Verfahren zum Ausschneiden wenigstens eines Werkstücks (12) aus einer Blechtafel (6) mit den Schritten
A) Anordnen einer Blechtafel (6) auf einer Auflage (4) einer Laserschneidmaschine (1);
B) Richten eines Laserstrahls (5) auf die Blechtafel (6) entlang eines Umrisses (19) des Werkstücks (12), wobei in einem Hauptbereich des Umrisses (19) die Blechtafel (6) durchschnitten wird und wobei in wenigstens einem Verbindungsbereich des Umrisses (19) zwischen dem Werkstück (12) und einem angrenzenden Teil (13) der Blechtafel (6) wenigstens eine Verbindung (14; 14a, 14b) bestehen bleibt, die eine Höhe (d) aufweist, welche kleiner ist als eine Dicke (D) der Blechtafel (6);
**gekennzeichnet durch** die folgenden Schritte:
C) Entnehmen des wenigstens einen Werkstücks (12) und des hiermit verbundenen angrenzenden Teils (13) von der Auflage, wobei eine Entnahmevorrichtung eingesetzt wird;
D) Trennen des wenigstens einen Werkstücks (12) von dem angrenzenden Teil (13), wobei das Trennen erfolgt, während die zum Entnehmen im Schritt C) eingesetzte Entnahmevorrichtung das Werkstück (12) mittelbar oder unmittelbar hält.

2. Verfahren nach Anspruch 1, **dadurch gekennzeichnet, dass** eine Höhe (d) der Verbindung (14; 14a, 14b) kleiner Höhe höchstens ein Drittel, bevorzugt höchstens ein Viertel, besonders bevorzugt höchstens ein Sechstel der Dicke (D) der Blechtafel (6) beträgt.

3. Verfahren nach einem der vorhergehenden Ansprüche, **dadurch gekennzeichnet, dass** eine entlang des Umrisses (19) gemessene Länge (L) der Verbindung (14; 14a, 14b) kleiner Höhe höchstens die Hälfte und/oder wenigstens ein Viertel der Dicke (D) der Blechtafel (6) beträgt.

4. Verfahren nach einem der vorhergehenden Ansprüche, **dadurch gekennzeichnet, dass** im Schritt B) eine Gruppe (26) von Werkstücken (12) gebildet wird, die über Verbindungen (14) kleiner Höhe an wenigstens einer gemeinsamen Umrisslinie (27) der Werkstücke (12) miteinander verbunden sind.

5. Verfahren nach Anspruch 4, **dadurch gekennzeichnet, dass** die Gruppe (26) von Werkstücken (12) einen umlaufenden Außenumriss (28) aufweist, der durch Umrisslinien (29) der Werkstücke (12) gebildet ist, entlang denen die Blechtafel (6) durschnitten wird.

6. Verfahren nach Anspruch 4 oder 5, **dadurch gekennzeichnet, dass** im Schritt C) eine Entnahmevorrichtung an einem der Werkstücke (12) der Gruppe (26) angreift.

7. Verfahren nach einem der Ansprüche 1-3, **dadurch gekennzeichnet, dass** im Schritt B) eine Gruppe (16) von Werkstücken (12) gebildet wird, die jeweils über wenigstens eine Verbindung (14) kleiner Höhe mit einem gemeinsamen Restgitter-Teil (17; 17a, 17b; 17c, 17d) verbunden bleiben, und dass im Schritt C) die mehreren Werkstücke (12) und das angrenzende Restgitter-Teil (17; 17a, 17b; 17c, 17d) gemeinsam entnommen werden.

8. Verfahren nach Anspruch 7, **dadurch gekennzeichnet, dass** das Restgitter-Teil (17; 17a, 17b; 17c, 17d) vor Schritt C), insbesondere entlang einer umlaufenden Kontur (18), von der Blechtafel (6) freigeschnitten wird, vorzugsweise wobei die Kontur (18) konkav ist.

9. Verfahren nach Anspruch 8, **dadurch gekennzeichnet, dass** ein kleinster Abstand der Kontur (18) von den Werkstücken (12) der Gruppe (16) wenigstens 12 mm beträgt, und vorzugsweise größer ist als die Dicke (D) der Blechtafel (6), und/oder dass auf dem Restgitter-Teil (17; 17a, 17b; 17c, 17d) wenigstens eine Angriffsfläche (21) für eine Entnahmevorrichtung von wenigstens 120 mm im Durchmesser von Werkstücken (12) frei bleibt.

10. Verfahren nach einem der Ansprüche 7 bis 9, **dadurch gekennzeichnet, dass** im Schritt C) eine Entnahmevorrichtung an dem Restgitter-Teil (17; 17a, 17b; 17c, 17d) angreift.

11. Verfahren nach einem der vorhergehenden Ansprüche, **dadurch gekennzeichnet, dass** die Auflage (4) parallel verlaufende Stege (23) aufweist, und dass das ein Werkstück (12), das schmaler ist als ein Abstand (A) zwischen zwei benachbarten Stegen (23) zwei Verbindungen (14) kleiner Höhe erhält, bevorzugt wobei eine erste der Verbindungen (14) kleiner Höhe an einer Schmalseite (24) des Werkstücks (12) angeordnet ist, besonders bevorzugt wobei eine zweite der Verbindungen (14) kleiner Höhe an einer Längsseite (25) des Werkstücks (12) angeordnet ist, insbesondere um wenigstens 60 % einer Länge des Werkstücks (12) von der ersten Verbindung (14) entfernt.

12. Verfahren nach einem der vorhergehenden Ansprüche, **dadurch gekennzeichnet, dass** die Entnahmevorrichtung zum Entnehmen im Schritt C) einen Vakuum-Greifer, einen Magnet-Greifer, einen Bernoulli-Greifer und/oder einen mechanischen Greifer, insbesondere einen Zangen-Greifer, aufweist.

13. Verfahren nach einem der vorhergehenden Ansprüche, **dadurch gekennzeichnet, dass** das Trennen in Schritt D) durch Rütteln, Drücken, Ausblasen oder Ziehen, insbesondere magnetisches Ziehen oder Ziehen mittels Unterdruck, erfolgt.

## Claims

1. Method for cutting at least one workpiece (12) from a metal sheet (6), comprising the steps of
A) arranging a metal sheet (6) on a support (4) of a laser cutting machine (1);
B) directing a laser beam (5) onto the metal sheet (6) along an outline (19) of the workpiece (12), wherein the metal sheet (6) is cut through in a main region of the outline (19), and wherein at least one connecting portion (14; 14a, 14b), which has a height (d) that is less than a thickness (D) of the metal sheet (6), remains in at least one connection region of the outline (19) between the workpiece (12) and an adjoining part (13) of the metal sheet (6);
**characterized by** the following steps:
C) removing the at least one workpiece (12) and the adjoining part (13) connected thereto from the support, wherein a removal device is used;
D) separating the at least one workpiece (12) from the adjoining part (13), wherein the separation takes place while the removal device used for removal in step C) indirectly or directly holds the workpiece (12).

2. Method according to claim 1, **characterized in that** a height (d) of the connecting portion (14; 14a, 14b) of low height is at most one third, preferably at most one quarter, and particularly preferably at most one sixth of the thickness (D) of the metal sheet (6).

3. Method according to any of the preceding claims, **characterized in that** a length (L) of the connecting portion (14; 14a, 14b) of low height, measured along the outline (19), is at most half and/or at least one quarter of the thickness (D) of the metal sheet (6).

4. Method according to any of the preceding claims, **characterized in that**, in step B), a group (26) of workpieces (12) is formed which are connected to one another by means of connecting portions (14) of low height at at least one common outline line (27) of the workpieces (12).

5. Method according to claim 4, **characterized in that** the group (26) of workpieces (12) has a circumferential outer contour (28), which is formed by outline lines (29) of the workpieces (12), along which the metal sheet (6) is cut through.

6. Method according to claim 4 or 5, **characterized in that**, in step C), a removal device engages one of the workpieces (12) of the group (26).

7. Method according to one of the claims 1 to 3, **characterized in that**,
in step B), a group (16) of workpieces (12) is formed which each remain connected to a common sheet skeleton part (17; 17a, 17b; 17c, 17d) via at least one connecting portion (14) of low height,
and **in that**, in step C), the plurality of workpieces (12) and the adjoining sheet skeleton part (17; 17a, 17b; 17c, 17d) are removed jointly.

8. Method according to claim 7, **characterized in that** the sheet skeleton part (17; 17a, 17b; 17c, 17d) is cut free from the metal sheet (6) prior to step C) - in particular, along a circumferential contour (18) - wherein the contour (18) is preferably concave.

9. Method according to claim 8, **characterized in that** a smallest distance of the contour (18) from the workpieces (12) of the group (16) is at least 12 mm, and preferably is greater than the thickness (D) of the metal sheet (6), and/or that, on the sheet skeleton part (17; 17a, 17b; 17c, 17d), at least one engagement surface (21) for a removal device of at least 120 mm in diameter remains free of workpieces (12).

10. Method according to any of claims 7 to 9, **characterized in that**, in step C), a removal device engages the sheet skeleton part (17; 17a, 17b; 17c, 17d).

11. Method according to any of the preceding claims, **characterized in that** the support (4) has webs (23) running in parallel, and **in that** the workpiece (12), which is narrower than a spacing (A) between two adjacent webs (23), receives two connecting portions (14) of low height - preferably wherein a first of the connecting portions (14) of low height is arranged on a narrow side (24) of the workpiece (12), and particularly preferably wherein a second of the connecting portions (14) of low height is arranged on a long side (25) of the workpiece (12) - in particular, distanced by at least 60% of a length of the workpiece (12) from the first connecting portion (14).

12. Method according to any of the preceding claims, **characterized in that** the removal device for removal in step C) has a vacuum gripper, a magnet gripper, a Bernoulli gripper, and/or a mechanical gripper - in particular, a tongs gripper.

13. Method according to any of the preceding claims, **characterized in that** the separation in step D) takes place by vibrating, pressing, blowing out, or pulling - in particular, magnetic pulling or pulling by means of a negative pressure.

## Revendications

1. Procédé de découpe d'au moins une pièce (12) à partir d'une tôle (6) comprenant les étapes suivantes :
A) Disposition d'une tôle (6) sur un support (4) d'une machine de découpe au laser (1) ;
B) Orientation d'un faisceau laser (5) sur la tôle (6) le long d'un contour (19) de la pièce (12), la tôle (6) étant découpée dans une zone principale du contour (19) et au moins une liaison (14 ; 14a, 14b) subsistant dans au moins une zone de liaison du contour (19) entre la pièce (12) et une partie adjacente (13) de la tôle (6), ladite liaison présentant une hauteur (d) inférieure à une épaisseur (D) de la tôle (6) ;
**caractérisé par** les étapes suivantes :
C) Extraction d'au moins une pièce (12) et de la partie adjacente (13) qui lui est liée du support, à l'aide d'un dispositif d'extraction ;
D) Séparation d'au moins une pièce (12) de la partie adjacente (13), la séparation ayant lieu pendant que le dispositif d'extraction utilisé pour l'extraction à l'étape C) maintient la pièce (12) directement ou indirectement.

2. Procédé selon la revendication 1, **caractérisé en ce qu'**une hauteur (d) de la liaison (14 ; 14a, 14b) de faible hauteur représente au plus un tiers, de préférence au plus un quart, particulièrement de préférence au plus un sixième de l'épaisseur (D) de la tôle (6).

3. Procédé selon l'une des revendications précédentes, **caractérisé en ce qu'**une longueur (L) de la liaison (14 ; 14a, 14b) de faible hauteur, mesurée le long du contour (19), représente au plus la moitié et/ou au moins un quart de l'épaisseur (D) de la tôle (6).

4. Procédé selon l'une des revendications précédentes, **caractérisé en ce qu'**à l'étape B) un groupe (26) de pièces (12) est formé, lesquelles sont reliées entre elles par des liaisons (14) de faible hauteur sur au moins une ligne de contour commune (27) des pièces (12).

5. Procédé selon la revendication 4, **caractérisé en ce que** le groupe (26) de pièces (12) présente un contour extérieur (28) périphérique, formé par des lignes de contour (29) des pièces (12), le long desquelles la tôle (6) est découpée.

6. Procédé selon la revendication 4 ou 5, **caractérisé en ce qu'**à l'étape C) un dispositif d'extraction agit sur l'une des pièces (12) du groupe (26).

7. Procédé selon l'une des revendications 1 à 3, **caractérisé en ce qu'**à l'étape B) un groupe (16) de pièces (12) est formé, lesquelles restent chacune reliées par au moins une liaison (14) de faible hauteur à une partie de grille résiduelle commune (17 ; 17a, 17b ; 17c, 17d), et **en ce qu'**à l'étape C) les plusieurs pièces (12) et la partie de grille résiduelle adjacente (17 ; 17a, 17b ; 17c, 17d) sont extraites ensemble.

8. Procédé selon la revendication 7, **caractérisé en ce que** la partie de grille résiduelle (17 ; 17a, 17b ; 17c, 17d) est découpée librement de la tôle (6) avant l'étape C), notamment le long d'un contour (18) périphérique, de préférence le contour (18) étant concave.

9. Procédé selon la revendication 8, **caractérisé en ce qu'**une distance minimale du contour (18) par rapport aux pièces (12) du groupe (16) est d'au moins 12 mm, et de préférence supérieure à l'épaisseur (D) de la tôle (6), et/ou **en ce qu'**au moins une surface d'attaque (21) pour un dispositif d'extraction d'au moins 120 mm de diamètre de pièces (12) reste libre sur la partie de grille résiduelle (17 ; 17a, 17b ; 17c, 17d).

10. Procédé selon l'une des revendications 7 à 9, **caractérisé en ce qu'**à l'étape C) un dispositif d'extraction agit sur la partie de grille résiduelle (17 ; 17a, 17b ; 17c, 17d).

11. Procédé selon l'une des revendications précédentes, **caractérisé en ce que** le support (4) présente des nervures (23) parallèles, et **en ce qu'**une pièce (12) plus étroite qu'une distance (A) entre deux nervures (23) adjacentes reçoit deux liaisons (14) de faible hauteur, de préférence une première des liaisons (14) de faible hauteur étant disposée sur un côté étroit (24) de la pièce (12), particulièrement de préférence une seconde des liaisons (14) de faible hauteur étant disposée sur un côté longitudinal (25) de la pièce (12), notamment à au moins 60 % d'une longueur de la pièce (12) à partir de la première liaison (14).

12. Procédé selon l'une des revendications précédentes, **caractérisé en ce que** le dispositif d'extraction pour l'extraction à l'étape C) comprend un préhenseur à vide, un préhenseur magnétique, un préhenseur Bernoulli et/ou un préhenseur mécanique, notamment un préhenseur à pince.

13. Procédé selon l'une des revendications précédentes, **caractérisé en ce que** la séparation à l'étape D) s'effectue en secouant, en poussant, en soufflant ou en tirant, notamment par traction magnétique ou traction par dépression.
